# EUROPEAN PATENT APPLICATION

(11) **EP 3 220 255 A1**
(43) Date of publication of application: **20.09.2017**
(21) Application number: 15909096.8
(22) Date of filing: 27.11.2015
(51) Int. Cl.: G06F 3/06

(54) **METHOD FOR STORAGE DEVICE STORING DATA AND STORAGE DEVICE**

(71) Applicant: Huawei Technologies Co., Ltd., Longgang District Shenzhen, Guangdong 518129 (CN)
(72) Inventor: LIN, Chungong, Shenzhen Guangdong 518129 (CN); XU, Fei, Shenzhen Guangdong 518129 (CN); CAI, Enting, Shenzhen Guangdong 518129 (CN)
(74) Representative: Kreuz, Georg Maria
(86) International application number: PCT/CN2015/095846
(87) International publication number: WO 2017/088185

(57) **Abstract**

The present invention discloses a solution for storing data by a storage device. The storage device includes a first storage area and a second storage area, where the first storage area includes data space and reserved space, and the second storage area includes data space and reserved space, and the storage device determines a feature of a write request, and stores, according to a determining result, data carried in the write request to reserved space of a corresponding storage area.

## Description

### TECHNICAL FIELD

The present invention relates to the field of information technologies, and in particular, to a method for storing data by a storage device and a storage device.

### BACKGROUND

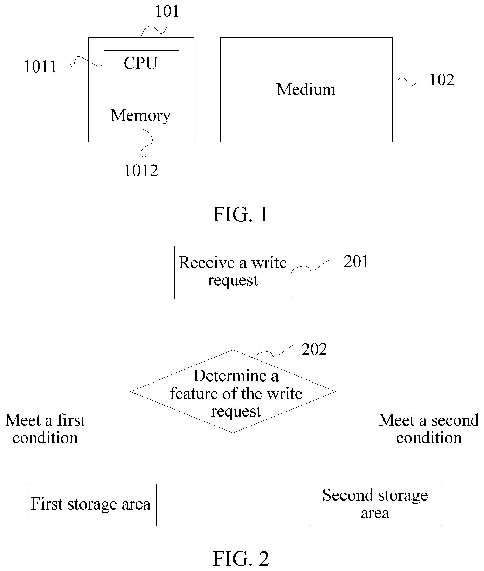

A solid state disk (Solid State Disk, SSD), as shown in FIG. 1, includes a storage controller 101 and a medium 102 (for example, a flash memory chip). The storage controller 101 includes a central processing unit 1011 (Center Processing Unit, CPU) and a memory 1012. Storage in the SSD is organized by using a physical block (physical block) and a page (page) as units. The page is the smallest read/write unit in the solid state disk, and a size of the page may be 4 KB, 8 KB, or 16 KB. Pages are combined into a physical block, and each physical block may have 32, 64, or 128 pages. The SSD generally divides storage space into data space and reserved space (Over-Provisioning). The data space is space to which data is already written, and the reserved space is free space, includes free pages, and data may be written to the reserved space. When data already stored in the data space in the SSD is to be overwritten by new data, a redirect-on-write (Redirection On Write, ROW) mechanism is used. That is, when the SSD writes new data to a logical block address (Logical Block Address, LBA) to modify the already stored data, the SSD writes the new data to a page of the reserved space, establishes a mapping relationship between the LBA and a page address of the reserved space, and marks data in a page address, to which the LBA is previously mapped, of the data space as garbage data. When the reserved space is less than a threshold, the SSD performs garbage space recycling for a physical block of the page in which the garbage data is located. A recycling process is as follows: reading valid data in the physical block of the page in which the garbage data is located, writing the read valid data to the reserved space, erasing data in the physical block of the page in which the garbage data is located, and using the physical block as new reserved space. In the garbage space recycling process, a process in which the valid data is read and the valid data is written to the reserved space is referred to as a movement of valid data.

The garbage space recycling causes write amplification, and a ratio of a sum of a size V of the valid data moved in the garbage space recycling in the SSD and a size W of the newly written data to the size W of the newly written data, that is, (V+W)/W, is referred to as write amplification.

### SUMMARY

According to a first aspect, an embodiment of the present invention provides a solution for storing data by a storage device, where the storage device includes a first storage area and a second storage area, where the first storage area includes data space and reserved space, and the second storage area includes data space and reserved space, the storage device receives a write request, where the write request carries a logical address and data, and the storage device determines a feature of the write request.

When the feature of the write request meets a first condition, the storage device writes the data carried in the write request to a first storage address of the reserved space of the first storage area, and establishes a mapping relationship between the logical address and the first storage address, or when the feature of the write request meets a second condition, the storage device writes the data carried in the write request to a second storage address of the reserved space of the second storage area, and establishes a mapping relationship between the logical address and the second storage address. In this embodiment of the present invention, the data carried in the write request is written to reserved space of different storage areas according to the feature of the write request, which reduces movements of valid data in a garbage space recycling process and reduces write amplification.

Optionally, the storage device may independently perform garbage recycling for the first storage area and the second storage area. That the storage device may independently perform garbage space recycling for the first storage area and the second storage area means that the storage device performs garbage space recycling for one of the first storage area and the second storage area, and does not affect the other storage area, or may perform garbage space recycling for both the first storage area and the second storage area. For write requests having different features, data is written to different storage areas, and garbage space recycling is independently performed for the storage areas based on different reserved space configured in the different storage areas. Therefore, movements of valid data in a garbage space recycling process can be reduced, write amplification can be reduced, and a quantity of times of triggering the garbage space recycling process can also be reduced by configuring different reserved space, so that a quantity of times of erasing a physical block in the storage device is reduced, and a service life of the storage device is increased.

Optionally, a size of the reserved space of the first storage area is different from a size of the reserved space of the second storage area.

Optionally, the reserved space of the first storage area is smaller than the reserved space of the second storage area, or a ratio of the reserved space of the first storage area to the data space of the first storage area is less than a ratio of the reserved space of the second storage area to the data space of the second storage area. Because the second storage area has more reserved space, a quantity of times of garbage space recycling in the second storage area can be reduced.

Optionally, when data is written to a corresponding storage area, for example, the foregoing first or second storage area, if reserved space of the corresponding storage area is insufficient, dynamic adjustment may be performed. For example, under the precondition that a maximum redundant quota is not used up, extra reserved space may be applied for, and then the data in the write request is written to the reserved space that is newly applied for.

Optionally, the determining, by the storage device, a feature of the write request includes:
determining, by the storage device, whether the write request is a sequential write request or a random write request, where the first condition is the sequential write request, and the second condition is the random write request, and respectively storing the sequential write request and the random write request in different storage areas, which reduces movements of valid data in a garbage space recycling process and reduces write amplification. In addition, in a case in which both the sequential write request and the random write request exist, random write performance of the storage device is improved without affecting performance of the sequential write request. Optionally, it is determined whether data is written to a reference logical address, where an absolute value of an address difference between the reference logical address and the logical address is not greater than L, and L may be set according to a requirement for the sequential write request. In one implementation, when data is written to the reference logical address, the write request is a sequential write request; otherwise, the write request is a random write request. In another implementation, when no data is written to the reference logical address, the write request is a random write request. When data is written to the reference logical address, further, the storage device determines whether an interval between a time at which the write request carrying a reference address is received for the last time and a time at which the write request carrying the logical address is received for the last time is greater than a threshold T, and if yes, the write request is still a random write request; otherwise, the write request is a sequential write request. T may be set according to a specific implementation.

Optionally, the determining, by the storage device, a feature of the write request includes:
determining, by the storage device, a sequence level of the write request, where the first condition is a first sequence level range, the second condition is a second sequence level range, and a minimum value of the first sequence level range is greater than a maximum value of the second sequence level range. Optionally, the sequence level is a ratio S (a sequence level) of a sequential write request count Cs of a current logical address to (a sum of the sequential write request count Cs of the current logical address and a random write request count Cr of the current logical address), that is, Cs/(Cs+Cr)=S. According to the sequence level, data carried in write requests having different sequence levels may be respectively stored in different storage areas having different reserved space, which reduces movements of valid data in a garbage space recycling process and reduces write amplification.

Optionally, the determining, by the storage device, a feature of the write request includes:
determining, by the storage device, a randomness level of the write request, where
the first condition is a first randomness level range, the second condition is a second randomness level range, and a maximum value of the first randomness level range is less than a minimum value of the second randomness level range. Optionally, the randomness level is a ratio R of a random write request count Cr of a current logical address to (a sum of a sequential write request count Cs of the current logical address and the random write request count Cr of the current logical address), that is, Cr/(Cr+Cs)=R. According to the randomness level, data carried in write requests having different randomness levels may be separately stored, which reduces movements of valid data in a garbage space recycling process and reduces write amplification.

Optionally, the determining, by the storage device, a feature of the write request includes:
determining, by the storage device, a size of the data carried in the write request, where
the first condition is a first data range stored in the first storage area, the second condition is a second data range stored in the second storage area, and a minimum value of the first data range is greater than a maximum value of the second data range. The storage device includes different storage areas, each storage area stores a corresponding data storage range, which may reduce movements of valid data in a garbage recycling process and reduce write amplification. Optionally, a data range refers to an interval of a size of data carried in a write request stored in a storage area.

Optionally, in a case in which multiple write requests are concurrently sent, the storage device preferentially processes a write request meeting the first condition, to improve write performance of the storage device.

Optionally, the storage device is an SSD, or a shingled magnetic recording (Shingled Magnetic Recording, SMR) disk, or a storage array having a garbage space recycling function and based on a ROW mechanism.

Corresponding to the solution implemented in the first aspect, according to a second aspect, an embodiment of the present invention further provides a solution for dividing a storage area by a storage device. The storage device divides storage space into a first storage area and a second storage area, where the first storage area includes data space and reserved space, and the second storage area includes data space and reserved space, where the reserved space of the first storage area is configured to store data carried in a first write request, the reserved space of the second storage area is configured to store data carried in a second write request, a feature of the first write request meets a first condition, and a feature of the second write request meets a second condition.

Optionally, a corresponding quantity of storage areas may be divided according to a class number of a sequence level or a randomness level of a write request, and corresponding reserved space is configured according to a value of each class of the sequence level or the randomness level. Division of the storage areas and configuration of the corresponding reserved space may be performed in advance, or dynamic division and configuration may be performed during use.

According to a third aspect, corresponding to the first aspect and the second aspect, an embodiment of the present invention further provides a storage device, separately used as the storage device in the embodiments of the first aspect and the second aspect, to implement the solutions of the embodiments provided in the first aspect and the second aspect of the embodiments of the present invention. The storage device includes a structural unit implementing the solutions of the embodiments of the present invention in the first aspect and the second aspect, or the storage device includes a storage controller to implement the solutions of the embodiments in the first aspect and the second aspect.

Correspondingly, an embodiment of the present invention further provides a non-volatile computer readable storage medium and a computer program product. When a computer instruction included in the non-volatile computer readable storage medium and the computer program product is loaded in a memory of the storage controller of the storage device provided in the embodiments of the present invention, and a CPU of the storage controller executes the computer instruction, the storage device performs functions of the storage device in the embodiments of the first aspect and the second aspect, to implement the solutions provided in the first aspect and the second aspect of the embodiments of the present invention.

### BRIEF DESCRIPTION OF DRAWINGS

FIG. 1 is a schematic structural diagram of an SSD;
FIG. 2 is a flowchart according to an embodiment of the present invention;
FIG. 3 is a schematic diagram of a storage area according to an embodiment of the present invention;
FIG. 4 is a schematic diagram of a storage area according to an embodiment of the present invention;
FIG. 5 is a schematic diagram of a storage area according to an embodiment of the present invention;
FIG. 6 is a schematic diagram of a storage area according to an embodiment of the present invention;
FIG. 7 is a schematic diagram of a storage area according to an embodiment of the present invention;
FIG. 8 is a schematic diagram of a storage area according to an embodiment of the present invention;
FIG. 9 is a schematic diagram of a storage area according to an embodiment of the present invention;
FIG. 10 is a schematic diagram of a storage device according to an embodiment of the present invention; and
FIG. 11 is a schematic diagram of a storage device according to an embodiment of the present invention.

### DESCRIPTION OF EMBODIMENTS

An SSD is used as an example in an embodiment of the present invention. In this embodiment of the present invention, the SSD includes a first storage area Vd1 and a second storage area Vd2. Vd1 includes data space and reserved space, Vd2 includes data space and reserved space, and a size of the reserved space of Vd1 is different from a size of the reserved space of Vd2. In this embodiment of the present invention, the SSD may independently perform garbage space recycling for Vd1 and Vd2. That the SSD may independently perform garbage space recycling for Vd1 and Vd2 means that the SSD performs garbage space recycling for one of Vd1 and Vd2, and does not affect the other storage area, or may perform garbage space recycling for both Vd1 and Vd2. For write requests having different features, data is written to different storage areas, and garbage space recycling is independently performed for the storage areas based on different reserved space configured in the different storage areas. Therefore, movements of valid data in a garbage space recycling process can be reduced, write amplification can be reduced, and a quantity of times of triggering the garbage space recycling process can also be reduced by configuring different reserved space, so that a quantity of times of erasing a physical block in the SSD is reduced, and a service life of the SSD is increased.

The foregoing characteristics of the SSD in this embodiment of the present invention may further be applied to another storage device in the embodiments of the present invention, and details are not described herein again.

As shown in FIG. 2, an embodiment of the present invention includes:
Step 201: Receive a write request.

An SSD receives a write request, where the write request carries an LBA and data.

Step 202: Determine a feature of the write request.

An implementation manner of determining a feature of the write request includes:

Specifically, when receiving the write request, the SSD determines whether the write request is a sequential write request or a random write request. In this embodiment of the present invention, the SSD records a time at which each write request is received and an LBA address carried in the write request. In a specific implementation manner, a method for determining whether the write request is a sequential write request (a first condition shown in FIG. 2) or a random write request (a second condition shown in FIG. 2) is as follows:

The SSD records the LBA carried in the received write request, and a time at which the write request is received for the last time. According to an LBA m carried in the write request, the SSD queries whether data is written to an LBA n (referred to as a reference logical address), where an absolute value of a difference between the LBA m and the LBA n is not greater than L, and L may be set according to a requirement for the sequential write request. If no data is written to the LBA n, the write request carrying the LBA m is a random write request. In one implementation manner, if data is written to the LBA n, the write request carrying the LBA m is a sequential write request. In another implementation manner, when data is written to the LBA n, the SSD further determines whether an interval between a time at which the write request carrying the LBA n is received for the last time and a time at which the write request carrying the LBA m is received for the last time is greater than a threshold T. If the interval is greater than T, the write request carrying the LBA m is a random write request. If the interval is not greater than T, the write request carrying the LBA m is a sequential write request. T may be set according to a specific implementation, which is not limited in this embodiment of the present invention. The sequential write request is generally a write request from a same file or application, and the random write request is a write request from a different file or application.

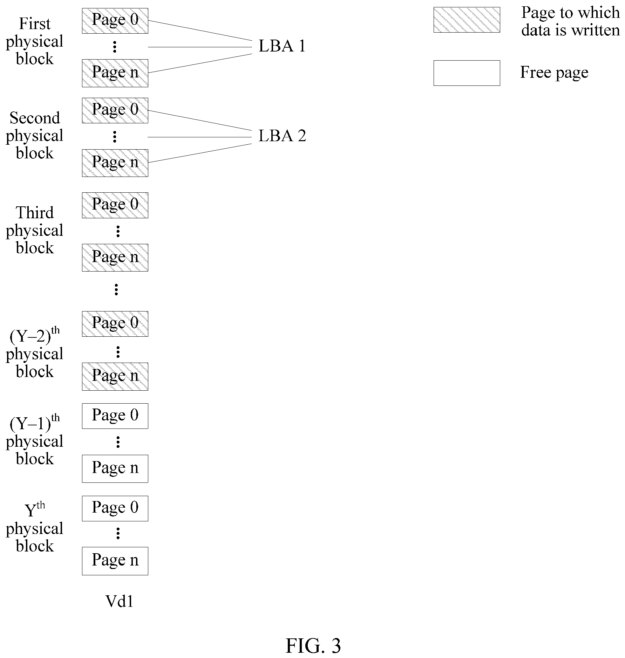

In this embodiment of the present invention, the SSD includes a first storage area (Vd1) shown in FIG. 2 and a second storage area (Vd2) shown in FIG. 2, where Vd1 and Vd2 each include one or more physical blocks. As shown in FIG. 3, in this embodiment of the present invention, Vd1 includes Y physical blocks, where each physical block includes (n+1) pages, Vd1 is configured to store data carried in a sequential write request, a first physical block to a (Y-2)^{th} physical block form data space of Vd1, and a (Y-1)^{th} physical block and a Y^{th} physical block form reserved space.

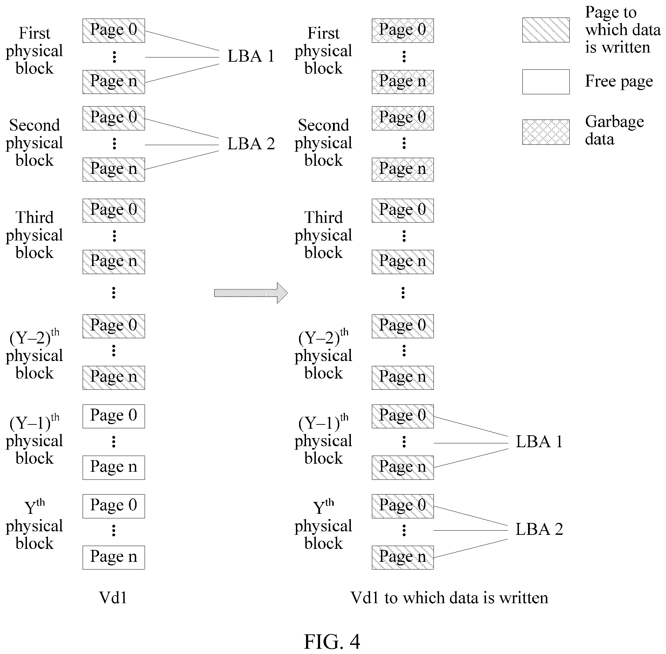

As shown in FIG. 4, an SSD receives a first sequential write request, where a logical address carried in the first sequential write request is an LBA 1. The LBA 1 is already mapped to (n+1) pages of the first physical block in Vd1, that is, the LBA 1 is mapped to a page 0 to a page n of the first physical block in Vd1. Based on a ROW mechanism of the SSD, the SSD writes data carried in the first sequential write request to the (Y-1)^{th} physical block of the reserved space in Vd1, establishes a mapping between the LBA 1 and (n+1) pages of the (Y-1)^{th} physical block in Vd1, that is, establishes a mapping between the LBA 1 and a page 0 to a page n of the (Y-1)^{th} physical block in Vd1, and identifies data in the page 0 to the page n of the first physical block in Vd1 as garbage data (and removes the mapping between the LBA 1 and the (n+1) pages of the first physical block in Vd1). The SSD receives a second sequential write request, where a logical address carried in the second sequential write request is an LBA 2. The LBA 2 is already mapped to (n+1) pages of the second physical block in Vd1, that is, the LBA 2 is mapped to a page 0 to a page n of the second physical block in Vd1. Based on the ROW mechanism of the SSD, the SSD writes data carried in the second sequential write request to the Y^{th} physical block of the reserved space in Vd1, establishes a mapping between the LBA 2 and (n+1) pages of the Y^{th} physical block in Vd1, that is, establishes a mapping between the LBA 2 and a page 0 to a page n of the Y^{th} physical block in Vd1, and identifies data in the page 0 to the page n of the second physical block in Vd1 as garbage data (and removes the mapping between the LBA 2 and the (n+1) pages of the second physical block in Vd1).

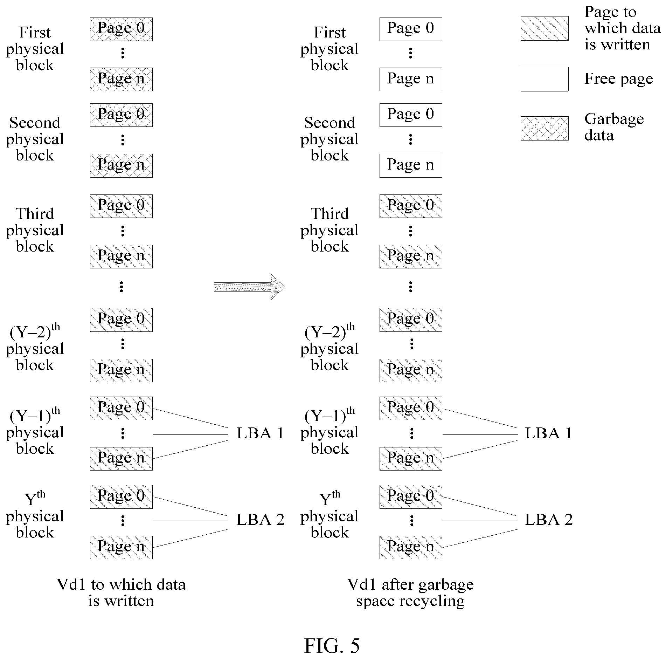

Because the reserved space in Vd1 shown in FIG. 4 changes to 0, garbage space recycling needs to be started. Garbage space recycling is performed for a physical block including the most garbage data in Vd1. In this embodiment of the present invention, the first physical block and the second physical block that are shown in FIG. 4 include the most garbage data. Therefore, garbage space recycling for the first physical block and the second physical block is started. As shown in FIG. 5, in a garbage space recycling process, because data stored in pages of the first physical block and the second physical block in Vd1 is all garbage data, and there is no valid data, a movement of valid data does not need to be performed, that is, there is no write amplification. Therefore, a sequential write request is stored in Vd1, and in the garbage space recycling process, movements of valid data and write amplification are reduced in Vd1. In addition, because there is no valid data or little valid data in the garbage space recycling process, a small amount of reserved space may be allocated to Vd1.

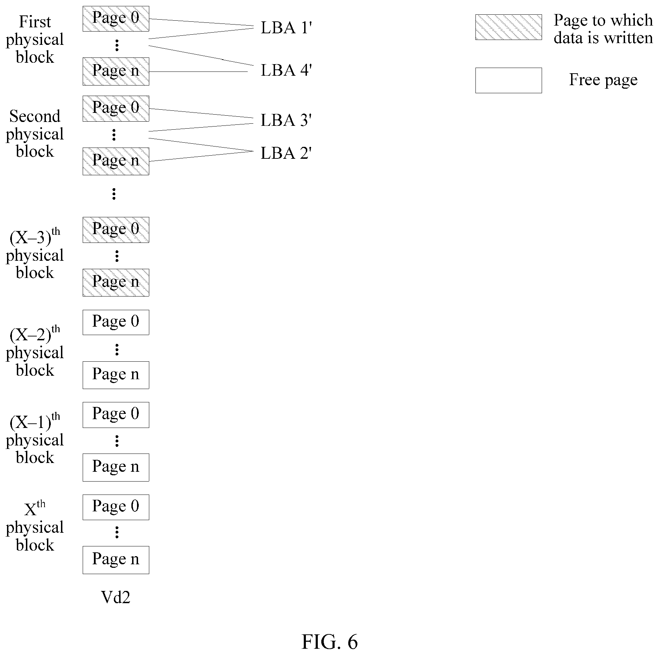

As shown in FIG. 6, in this embodiment of the present invention, Vd2 includes X physical blocks, where each physical block includes (n+1) pages, Vd2 is configured to store data carried in a random write request, a first physical block to an (X-3)^{th} physical block form data space of Vd2, and an (X-2)^{th} physical block to an X^{th} physical block form reserved space.

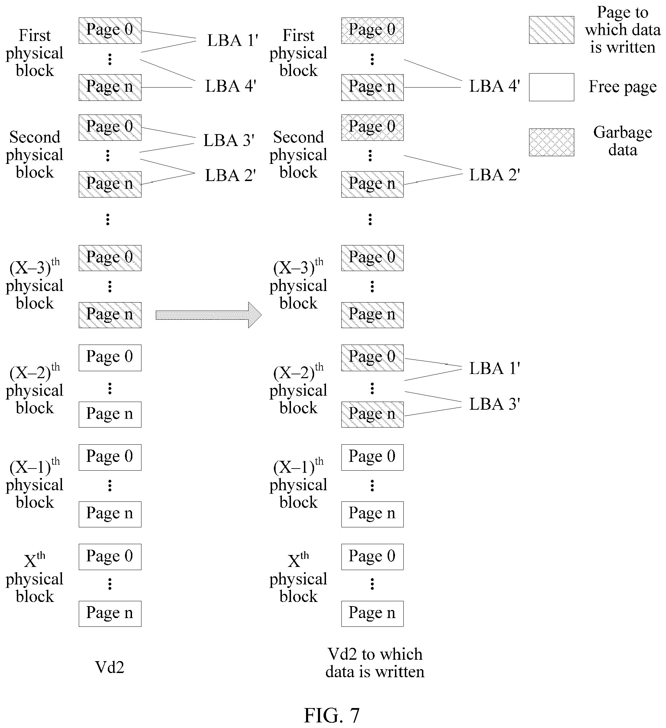

As shown in FIG. 7, an SSD receives a first random write request, where a logical address carried in the first random write request is an LBA 1'. The LBA 1' is already mapped to the first m pages of the first physical block in Vd2, that is, the LBA 1' is mapped to a page 0 to a page m-1 of the first physical block in Vd2. Based on a ROW mechanism of the SSD, the SSD writes data carried in the first random write request to the (X-2)^{th} physical block of the reserved space in Vd2, establishes a mapping between the LBA 1' and the first m pages of the (X-2)^{th} physical block in Vd2, that is, establishes a mapping between the LBA 1' and a page 0 to a page m-1 of the (X-2)^{th} physical block in Vd2, and identifies data in the page 0 to the page m-1 of the first physical block in Vd2 as garbage data (and removes the mapping between the LBA 1' and the first m pages of the first physical block in Vd2). The SSD receives a second random write request, where a logical address carried in the second random write request is an LBA 3'. The LBA 3' is already mapped to the first (n+1-m) pages of the second physical block in Vd2, that is, the LBA 3' is mapped to a page 0 to a page n-m of the second physical block in Vd2. Based on the ROW mechanism of the SSD, the SSD writes data carried in the second random write request to the (X-2)^{th} physical block of the reserved space in Vd2, establishes a mapping between the LBA 3' and the first (n+1-m) pages of the (X-2)^{th} physical block in Vd2, that is, establishes a mapping between the LBA 3' and a page m to a page n of the (X-2)^{th} physical block in Vd2, and identifies data in the page 0 to the page n-m of the second physical block in Vd2 as garbage data (and removes the mapping between the LBA 3' and the first (n+1-m) pages of the second physical block in Vd2).

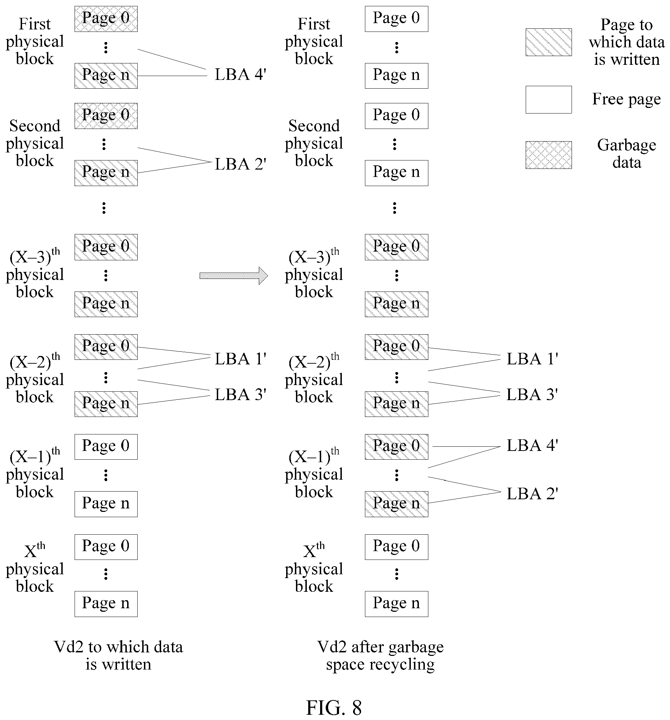

As shown in FIG. 8, when the reserved space in Vd2 is less than a threshold and garbage space recycling is started, it is determined that physical blocks for which recycling needs to be performed are the first physical block and the second physical block in Vd2. Valid data is stored in a page m to a page n of the first physical block, and a movement of valid data needs to be performed. In this embodiment of the present invention, the valid data stored in the page m to the page n of the first physical block is moved to a page 0 to a page n-m of the (X-1)^{th} physical block in Vd2, and a mapping between an LBA 4' and the page 0 to a page m-1 of the (X-1)^{th} physical block in Vd2 is established. In addition, valid data stored in a page m to a page n of the second physical block in Vd2 is moved to a page m to a page n of the (Y-1)^{th} physical block in Vd2, and a mapping between an LBA 2' and the page m to the page n of the (Y-1)^{th} physical block in Vd2 is established. The SSD erases data in the first physical block and the second physical block in Vd2, and the first physical block and the second physical block are used as reserved space.

In this embodiment of the present invention, Vd1 is configured to store data carried in a sequential write request, Vd2 is configured to store data carried in a random write request, and the data carried in the sequential write request and the data carried in the random write request are respectively stored in different storage areas according to a feature of a write request, which reduces movements of valid data in a garbage space recycling process and reduces write amplification.

In this embodiment of the present invention, more reserved space is allocated to Vd2, that is, the reserved space of Vd2 is larger than the reserved space of Vd1, which may reduce a quantity of times of garbage space recycling, so that a quantity of times of erasing a physical block in Vd2 is reduced, and a service life of an SSD is increased. In another implementation, a ratio of the reserved space of Vd2 to the data space of Vd2 is greater than a ratio of the reserved space of Vd1 to the data space of Vd1, which may also achieve an effect of reducing a quantity of times of garbage space recycling in this embodiment of the present invention.

In this embodiment of the present invention, the SSD includes Vd1 and Vd2, where Vd1 is configured to store data carried in a sequential write request, and Vd2 is configured to store data carried in a random write request. In a case in which both the random write request and the sequential write request exist, performance of the sequential write request is not affected, and random write performance of the SSD is improved.

Optionally, when data is written to a corresponding storage area, for example, the foregoing first or second storage area, if reserved space of the corresponding storage area is insufficient, dynamic adjustment may be performed. For example, under the precondition that a maximum redundant quota is not used up, extra reserved space may be applied for, and then the data in the write request is written to the reserved space that is newly applied for.

Optionally, in a case in which multiple write requests are concurrently sent, when write requests received by the SSD include both a sequential write request and a random write request, data carried in the sequential write request may be preferentially written to the first storage area, to improve write performance.

An embodiment of the present invention provides another implementation solution of step 2 of determining a feature of the write request: collecting, by the SSD, statistics about a sequential write request count and a random write request count in an LBA carried in the write request. In this embodiment of the present invention, the sequential write request count in the LBA carried in the write request is also referred to as a sequential write request count of the write request, and the random write request count in the LBA carried in the write request is also referred to as a random write request count of the write request.

For example, when the SSD determines that a write request carrying an LBA m is a sequential write request, a sequential write request count Cs of the LBA m is increased by 1, or when the SSD determines that a write request carrying an LBA m is a random write request, a random write request count Cr of the LBA m is increased by 1. A value S (a sequence level) of a current sequential write request count Cs of the LBA m divided by (a sum of the current sequential write request count Cs of the LBA m and a current random write request count Cr of the LBA m) is calculated. If S meets the first condition (a first sequence level range) shown in FIG. 2, data carried in the write request is written to Vd1, or when S meets the second condition (a second sequence level range) shown in FIG. 2, data carried in the write request is written to Vd2. For example, the first sequence level range is greater than 0.8 and is not greater than 1, and the second sequence level range is not greater than 0.8. A sequence level of a write request corresponding to data stored in Vd1 is greater than a sequence level of a write request corresponding to data stored in Vd2, and a physical block in Vd1 generates fewer movements of valid data than a physical block in Vd2 does in a garbage space recycling process, thereby reducing write amplification.

The sequence level of the write request corresponding to the data stored in Vd1 is greater than the sequence level of the write request corresponding to the data stored in Vd2, and reserved space allocated by the SSD to Vd1 is smaller than reserved space of Vd2, or a ratio of the reserved space of Vd1 to data space of Vd1 is less than a ratio of the reserved space of Vd2 to data space of Vd2. In this implementation manner, a quantity of times of garbage space recycling in Vd2 is reduced, thereby reducing a quantity of times of erasing a physical block in Vd2, and increasing a service life of the SSD. Further, write requests are respectively written to different areas according to different sequence levels; therefore, a write request having a higher sequence level is not affected, and random write performance of the SSD is improved.

Optionally, in a case in which multiple write requests are concurrently sent, when write requests received by an SSD have different sequence levels, a write request having a higher sequence level may be preferentially processed, or when write requests received by an SSD have different randomness levels, a write request having a lower randomness level may be preferentially processed, to improve write performance.

Another implementation manner may also be based on a randomness level R. When the SSD determines that a write request carrying an LBA m is a sequential write request, a sequential write request count Cs of the LBA m is increased by 1, or when the SSD determines that a write request carrying an LBA m is a random write request, a random write request count Cr of the LBA m is increased by 1. A value R (a randomness level) of a current random write request count Cr of the LBA m divided by (a sum of a current sequential write request count Cs of the LBA m and the current random write request count Cr of the LBA m) is calculated. If R meets the first condition (a first randomness level range) shown in FIG. 2, data carried in the write request is written to Vd1, or when R meets the second condition (a second randomness level range) shown in FIG. 2, data carried in the write request is written to Vd2. For example, the first randomness level range is not greater than 0.2, and the second randomness level range is greater than 0.2 but is not greater than 1. A randomness level of a write request corresponding to data stored in Vd1 is less than a randomness level of a write request corresponding to data stored in Vd2, and a physical block in Vd1 generates fewer movements of valid data than a physical block in Vd2 does in a garbage space recycling process, thereby reducing write amplification.

The randomness level of the write request corresponding to the data stored in Vd1 is less than the randomness level of the write request corresponding to the data stored in Vd2, and reserved space allocated by the SSD to Vd1 is smaller than reserved space of Vd2, or a ratio of the reserved space of Vd1 to data space of Vd1 is less than a ratio of the reserved space of Vd2 to data space of Vd2. In this implementation manner, a quantity of times of garbage space recycling in Vd2 is reduced, thereby reducing a quantity of times of erasing a physical block in Vd2, and increasing a service life of the SSD. Further, write requests are respectively written to different areas according to different randomness levels; therefore, a write request having a lower randomness level is not affected, and random write performance of the SSD is improved.

Optionally, a corresponding quantity of storage areas may be divided according to a class number of a sequence level or a randomness level of a write request, and corresponding reserved space is configured according to a value of each class of the sequence level or the randomness level. Division of the storage areas and configuration of the corresponding reserved space may be performed in advance, or dynamic division and configuration may be performed during use.

An embodiment of the present invention provides another implementation solution of step 2 of determining a feature of the write request: determining a size of data carried in the write request, and determining a storage area according to the size of the data carried in the write request.

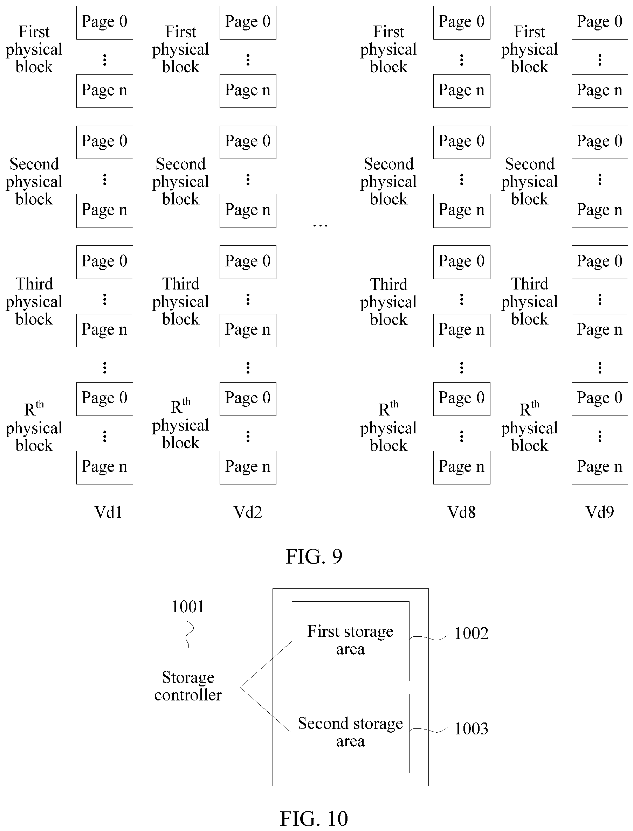

As shown in FIG. 9, an SSD includes nine storage areas, marked as Vd1, Vd2, ..., and Vd9. In this embodiment of the present invention, in one implementation manner, each storage area includes R physical blocks, and each physical block includes (n+1) pages. In another implementation manner, each storage area may include a different quantity of physical blocks, which is not limited in this embodiment of the present invention. The SSD selects a storage area according to a size of data carried in a write request. Vd1 is configured to store (0-4 KB] data, Vd2 is configured to store (4 KB-8 KB] data, Vd3 is configured to store (8 KB-16 KB] data, Vd4 is configured to store (16 KB-32 KB] data, Vd5 is configured to store (32 KB-64 KB] data, Vd6 is configured to store (64 KB-128 KB] data, Vd7 is configured to store (128 KB-256 KB] data, Vd8 is configured to store (256 KB-512 KB] data, and Vd9 is configured to store data that is greater than 512 KB. The (4 KB-8 KB] data is also referred to as data of a data range. A data range refers to an interval of a size of data carried in a write request stored in a storage area. A data range of Vd1 represents that a size of data carried in a write request stored in Vd1 is not greater than 4KB. When receiving a write request, the SSD determines, according to a data range stored in each storage area, a storage area that is used to store data carried in the write request. For example, the second storage area shown in FIG. 2 is Vd1. Because data in the data range of Vd1 is not greater than 4 KB (the second condition shown in FIG. 2), data carried in multiple write requests is stored in a same physical block. When some of the data is identified as invalid data because of modification, and garbage space recycling is performed for a physical block, data carried in another write request stored in the physical block is used as valid data, and a movement of valid data needs to be performed, thereby causing write amplification. For example, Vd9 is the first storage area shown in FIG. 2. Because data in a data range of Vd9 is greater than 512 KB (the first condition shown in FIG. 2), data carried in a same write request or a small quantity of write requests is stored in a same physical block. Therefore, when the SSD receives again a write request for modifying data in the physical block, data stored in pages of the entire physical block is identified as garbage data. When garbage space recycling is performed for the physical block, because all or most of data in the entire physical block is garbage data, no movement of valid data is generated or only a small quantity of movements of valid data is generated, which does not cause write amplification or causes small write amplification. Therefore, the SSD is divided into different storage areas, and each storage area stores a corresponding data storage range, which may reduce movements of valid data in a garbage space recycling process, and reduce write amplification. Optionally, a size of data carried in a write request determines a corresponding storage area. More reserved space is allocated to a storage area corresponding to a data range storing small data than to a storage area corresponding to a data range storing big data, or a ratio of reserved space of a storage area corresponding to a data range storing small data to data space of the storage area corresponding to the data range storing small data is greater than a ratio of reserved space of a storage area corresponding to a data range storing big data to data space of the storage area corresponding to the data range storing big data, which may reduce a quantity of times of garbage space recycling, reduce a quantity of times of erasing a physical block, and increase a service life of an SSD.

Optionally, in a case in which multiple write requests are concurrently sent, when receiving write requests carrying different sizes of data, an SSD may preferentially process a write request carrying a relatively big size of data, to improve write performance.

In this embodiment of the present invention, reserved space allocated by the SSD to Vd1 is smaller than reserved space of Vd2, or a ratio of the reserved space of Vd1 to data space of Vd1 is less than a ratio of the reserved space of Vd2 to data space of Vd2. In a specific implementation, weights of different reserved space quotas may be determined according to corresponding features of write requests in Vd1 and Vd2. The reserved space allocated to Vd1 is smaller than the reserved space of Vd2, or the ratio of the reserved space of Vd1 to the data space of Vd1 is less than the ratio of the reserved space of Vd2 to the data space of Vd2, which is not limited in this embodiment of the present invention.

In this embodiment of the present invention, after data carried in a write request is written to a page, a mapping relationship between an LBA and the page is established, and according to the specific implementation of the SSD, a mapping from the LBA to a physical block in which the page to which the data is written is located may be first established. For a specific implementation, refer to a mapping mechanism of the SSD, which is not limited in the present invention, and details are not described herein again.

The present invention may further be applied to a shingled magnetic recording (Shingled Magnetic Recording, SMR) disk. Because of a special structure of the SMR disk, when data is written to a track A, data on L tracks after the track A is overwritten, and data on a track before the track A is not overwritten. Therefore, M (M>=L) tracks are generally used to form a zone (zone) in the SMR disk, data in physical space in the zone is sequentially written, and valid data in the zone is first moved before the writing. The SMR disk generally uses a ROW mechanism, divides physical storage space into a data zone (a zone in which data is already stored) and a reserved zone (a free zone), and records a mapping from a logical address to the physical storage space. When data is being written, the data is sequentially written to space of the reserved zone, the logical address is then mapped to a physical address to which the data is newly written, and data stored in a physical address to which the logical address is previously mapped is marked as garbage data. After a quantity of reserved zones is less than a threshold, garbage space recycling is started, a zone having the most garbage data is found, valid data in the zone is moved, and the zone becomes a reserved zone to which data may continue to be written. The zone in the SMR disk has a characteristic similar to that of a physical block in an SSD. Therefore, a solution in which movements of valid data are reduced in garbage data in the SSD in the embodiments of the present invention may also be applied to the SMR disk. The SMR disk is divided into different storage areas, where each storage area includes multiple zones (including a data zone and a reserved zone), reserved zones having different sizes are allocated to the different storage areas, and a feature of a write request is determined. For example, whether the write request is a random write request or a sequential write request is determined, or a sequence level of the write request is determined, or a randomness level of the write request is determined, or a size of data carried in the write request is determined. The data carried in the write request is stored in a reserved zone of a specific storage area, so that movements of valid data in an SMR disk during garbage space recycling are reduced, and write amplification is reduced. For a specific implementation, reference may be made to an implementation solution of the SSD, and details are not described herein again in this embodiment of the present invention. For a manner in which reserved zones may be allocated to different storage areas in an SMR disk, refer to a manner described above in which reserved space is allocated to different storage areas in an SSD.

In addition, in a storage array having a garbage space recycling function and based on a ROW mechanism, for example, in an all-SSD storage array and a hard disk drive (HDD) storage array, a storage array controller divides a logical block address of each hard disk into blocks according to a unit (for example, 1 MB). One block is taken from each disk of N disks to form a segment (segment) meeting a condition (for example, a segment of a redundant array of independent disks (Redundant Array of Independent Disks, RAID), for example, to form a RAID 6 (including 3 data blocks + 2 check blocks). A sequential write manner is used in the segment to improve write performance. Data in the segment cannot be overwritten, and valid data in the segment needs to be first moved before writing. The storage array controller divides storage space into a data segment (a segment to which data is already written) and a reserved segment (a free segment), and records a mapping from a logical address to physical storage space. When data is being written, the storage array controller sequentially writes the data to a reserved segment, then maps a logical address to a physical address to which the data is newly written, and marks data stored in a physical address to which the logical address is previously mapped as garbage data. After a quantity of reserved segments is less than a threshold, garbage space recycling is started, a segment having the most garbage data is found, a valid data block in the segment is moved, and the segment becomes a reserved segment to which data may continue to be written.

In the foregoing storage array, the segment has a characteristic similar to that of a physical block in an SSD. Therefore, a solution in which movements of valid data are reduced during garbage data recycling in the SSD in the embodiments of the present invention may also be applied to the foregoing storage array. The storage array is divided into different storage areas, where each storage area includes multiple segments (including a data segment and a reserved segment), and a feature of a write request is determined. For example, whether the write request is a random write request or a sequential write request is determined, or a sequence level of the write request is determined, or a randomness level of the write request is determined, or a size of data carried in the write request is determined. The data carried in the write request is stored in a reserved segment of a specific storage area, so that movements of valid data in a storage array during garbage space recycling are reduced, and write amplification is reduced. For a specific implementation, reference may be made to an implementation solution of the SSD, and details are not described herein again in this embodiment of the present invention. For a manner in which reserved segments may be allocated to different storage areas in a storage array, refer to a manner described above in which reserved space is allocated to different storage areas in an SSD.

This embodiment of the present invention may further be applied to another product formed by using a flash memory medium and a storage medium having a similar characteristic.

Optionally, in an embodiment of the present invention, using an SSD as an example, the SSD may include more than two storage areas. Further, the SSD may determine a feature of a write request in multiple manners. For example, the SSD includes a first storage area and a second storage area, and determines whether a write request is a sequential write request or a random write request. When the write request is a sequential write request, the SSD writes data carried in the write request to the first storage area, or when the write request is a random write request, the SSD writes data carried in the write request to the second storage area. The SSD further includes a third storage area and a fourth storage area, determines a sequence level or a randomness level of a write request, and writes data carried in the write request to the third storage area or the fourth storage area according to the sequence level or the randomness level of the write request. Optionally, the SSD further includes a fifth storage area and a sixth storage area, determines a size of data carried in a write request, and writes data carried in the write request to the fifth storage area or the sixth storage area according to the size of the data carried in the write request. A combination of specific implementation manners is not limited in the present invention.

An embodiment of the present invention provides a storage device, as shown in FIG. 10, including: a storage controller 1001, a first storage area 1002, and a second storage area 1003, where the first storage area 1002 includes data space and reserved space, and the second storage area 1003 includes data space and reserved space. The storage controller 1001 is configured to perform the embodiment of the present invention shown in FIG. 2. Specifically, the storage controller 1001 receives a write request, where the write request carries a logical address and data, and determines a feature of the write request. When the feature of the write request meets a first condition, the storage controller 1001 writes the data carried in the write request to a first storage address of the reserved space of the first storage area 1002, and establishes a mapping relationship between the logical address and the first storage address, or when the feature of the write request meets a second condition, the storage controller 1001 writes the data carried in the write request to a second storage address of the reserved space of the second storage area 1003, and establishes a mapping relationship between the logical address and the second storage address. Optionally, the storage device shown in FIG. 10 may be an SSD, and the storage controller 1001 is a controller of the SSD. Optionally, the storage device shown in FIG. 10 may further be an SMR disk, and the storage controller 1001 is a controller of the SMR disk. Optionally, the storage device shown in FIG. 10 may further be a storage array described in the embodiments of the present invention, and the storage controller 1001 is an array controller of the storage array. For specific descriptions, refer to the descriptions of corresponding parts in the embodiments of the present invention, and details are not described herein again. Optionally, in a case in which multiple write requests are concurrently sent, the storage device preferentially processes a write request meeting the first condition, to improve write performance of the storage device. Optionally, when data is written to a corresponding storage area, for example, the foregoing first or second storage area, if reserved space of the corresponding storage area is insufficient, dynamic adjustment may be performed. For example, under the precondition that a maximum redundant quota is not used up, extra reserved space may be applied for, and then the data in the write request is written to the reserved space that is newly applied for.

The storage device in this embodiment of the present invention may further be another product formed by using a flash memory medium and a storage medium having a similar characteristic.

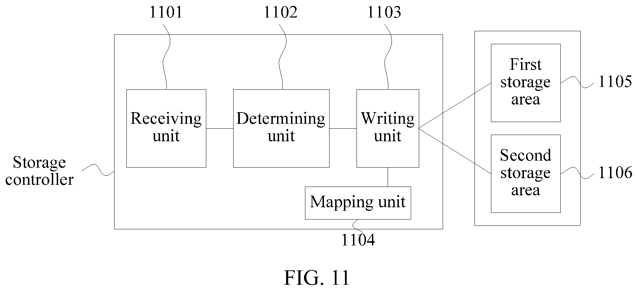

An embodiment of the present invention provides another storage device, as shown in FIG. 11, including a storage controller, a first storage area 1105, and a second storage area 1106, where the storage controller includes a receiving unit 1101, a determining unit 1102, a writing unit 1103, and a mapping unit 1104. The receiving unit 1101 is configured to receive a write request, where the write request carries a logical address and data. The determining unit 1102 is configured to determine a feature of the write request. The writing unit 1103 is configured to write, when the feature of the write request meets a first condition, the data carried in the write request to a first storage address of reserved space of the first storage area 1105. The mapping unit 1104 is configured to establish a mapping relationship between the logical address and the first storage address. The writing unit 1103 is further configured to write, when the feature of the write request meets a second condition, the data carried in the write request to a second storage address of reserved space of the second storage area 1106. The mapping unit 1104 is further configured to establish a mapping relationship between the logical address and the second storage address. Optionally, in the storage device shown in FIG. 11, the storage controller may independently perform garbage space recycling for the first storage area 1105 and the second storage area 1106. Optionally, a size of the reserved space of the first storage area 1105 is different from a size of the reserved space of the second storage area 1106. Optionally, the reserved space of the first storage area 1105 is smaller than the reserved space of the second storage area 1106, and the size of the reserved space of the first storage area 1105 is smaller than the size of the reserved space of the second storage area 1106. Optionally, a ratio of the reserved space of the first storage area 1105 to data space of the first storage area 1105 is less than a ratio of the reserved space of the second storage area 1106 to data space of the second storage area 1106. Optionally, the determining unit 1102 is specifically configured to determine whether the write request is a sequential write request or a random write request, where the first condition is the sequential write request, and the second condition is the random write request. Optionally, the determining unit 1102 is specifically configured to determine a sequence level of the write request, where the first condition is a first sequence level range, the second condition is a second sequence level range, and a minimum value of the first sequence level range is greater than a maximum value of the second sequence level range. For a meaning of a sequence level, refer to the description in the embodiment shown in FIG. 2. Optionally, the determining unit 1102 is specifically configured to determine a randomness level of the write request, where the first condition is a first randomness level range, the second condition is a second randomness level range, and a maximum value of the first randomness level range is less than a minimum value of the second randomness level range. For a meaning of a randomness level, refer to the description in the embodiment shown in FIG. 2. Optionally, the determining unit 1102 is specifically configured to determine a size of the data carried in the write request, where the first condition is a first data range stored in the first storage area 1105, the second condition is a second data range stored in the second storage area 1106, and a minimum value of the first data range is greater than a maximum value of the second data range. For a meaning of a data range, refer to the description in the embodiment shown in FIG. 2. Optionally, in a case in which multiple write requests are concurrently sent, the storage device preferentially processes a write request meeting the first condition, to improve write performance of the storage device. Optionally, when data is written to a corresponding storage area, for example, the foregoing first or second storage area, if reserved space of the corresponding storage area is insufficient, dynamic adjustment may be performed. For example, under the precondition that a maximum redundant quota is not used up, extra reserved space may be applied for, and then the data in the write request is written to the reserved space that is newly applied for.

The storage device shown in FIG. 11 may be an SSD, an SMR disk, or the storage array in the embodiments of the present invention. The storage device shown in FIG. 11 may further be another product formed by using a flash memory medium and a storage medium having a similar characteristic. For specific descriptions, refer to the descriptions of corresponding parts in the embodiments of the present invention, and details are not described herein again.

According to the storage device shown in FIG. 11, in one implementation manner, the foregoing units are installed on the storage device, the foregoing units may be loaded in a memory of the storage controller of the storage device, and a CPU of the storage controller executes an instruction in the memory, to implement a function in a corresponding embodiment of the present invention. In another implementation, a unit included in the storage device may be implemented by hardware, or implemented by a combination of software and hardware. The foregoing units may also be referred to as structural units.

An embodiment of the present invention further provides a non-volatile computer readable storage medium and a computer program product. When a computer instruction included in the non-volatile computer readable storage medium and the computer program product is loaded in the memory of the storage controller of the storage device shown in FIG. 10 or FIG. 11, a CPU executes the computer instruction loaded in the memory, to implement corresponding functions in the embodiments of the present invention.

According to the foregoing embodiments, an embodiment of the present invention provides a method for dividing a storage area by a storage device. The storage device divides storage space into a first storage area and a second storage area, where the first storage area includes data space and reserved space, and the second storage area includes data space and reserved space, where the reserved space of the first storage area is configured to store data carried in a first write request, the reserved space of the second storage area is configured to store data carried in a second write request, a feature of the first write request meets a first condition, and a feature of the second write request meets a second condition. Specifically, for the first condition, the second condition, the feature of the first write request, and the feature of the second write request, refer to the descriptions in the embodiment shown in FIG. 2, and details are not described herein again. For a relationship between the reserved space of the first storage area and the reserved space of the second storage area, also refer to the descriptions in the embodiment shown in FIG. 2. For a structure of the storage device in the embodiments of the present invention, reference may be made to FIG. 10, and details are not described herein again. Optionally, a corresponding quantity of storage areas may be divided according to a class number of a sequence level or a randomness level of a write request, and corresponding reserved space is configured according to a value of each class of the sequence level or the randomness level. Division of the storage areas and configuration of the corresponding reserved space may be performed in advance, or dynamic division and configuration may be performed during use.

In the several embodiments provided in the present invention, it should be understood that the disclosed apparatus and method may be implemented in other manners. For example, the unit division in the described apparatus embodiment is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

## Claims

1. A method for storing data by a storage device, wherein the storage device comprises a first storage area and a second storage area, wherein the first storage area comprises data space and reserved space, and the second storage area comprises data space and reserved space, and the method comprises:
Receiving, by the storage device, a write request, wherein the write request carries a logical address and data;
determining, by the storage device, a feature of the write request;
writing, by the storage device when the feature of the write request meets a first condition, the data carried in the write request to a first storage address of the reserved space of the first storage area; and
establishing, by the storage device, a mapping relationship between the logical address and the first storage address; or
writing, when the feature of the write request meets a second condition, the data carried in the write request to a second storage address of the reserved space of the second storage area; and
establishing, by the storage device, a mapping relationship between the logical address and the second storage address.

2. The method according to claim 1, wherein the reserved space of the first storage area is smaller than the reserved space of the second storage area.

3. The method according to claim 1, wherein a ratio of the reserved space of the first storage area to the data space of the first storage area is less than a ratio of the reserved space of the second storage area to the data space of the second storage area.

4. The method according to claim 2 or 3, wherein the determining, by the storage device, a feature of the write request comprises:
determining, by the storage device, whether the write request is a sequential write request or a random write request, wherein
the first condition is the sequential write request, and the second condition is the random write request.

5. The method according to claim 2 or 3, wherein the determining, by the storage device, a feature of the write request comprises:
determining, by the storage device, a sequence level of the write request, wherein
the first condition is a first sequence level range, the second condition is a second sequence level range, and a minimum value of the first sequence level range is greater than a maximum value of the second sequence level range.

6. The method according to claim 2 or 3, wherein the determining, by the storage device, a feature of the write request comprises:
determining, by the storage device, a randomness level of the write request, wherein
the first condition is a first randomness level range, the second condition is a second randomness level range, and a maximum value of the first randomness level range is less than a minimum value of the second randomness level range.

7. The method according to claim 2 or 3, wherein the determining, by the storage device, a feature of the write request comprises:
determining, by the storage device, a size of the data carried in the write request, wherein
the first condition is a first data range stored in the first storage area, the second condition is a second data range stored in the second storage area, and a minimum value of the first data range is greater than a maximum value of the second data range.

8. A storage device, comprising a storage controller, a first storage area, and a second storage area, wherein the first storage area comprises data space and reserved space, the second storage area comprises data space and reserved space, and the storage controller comprises:
a receiving unit, configured to receive a write request, wherein the write request carries a logical address and data;
a determining unit, configured to determine a feature of the write request;
a writing unit, configured to write, when the feature of the write request meets a first condition, the data carried in the write request to a first storage address of the reserved space of the first storage area;
a mapping unit, configured to establish a mapping relationship between the logical address and the first storage address, wherein
the writing unit is further configured to write, when the feature of the write request meets a second condition, the data carried in the write request to a second storage address of the reserved space of the second storage area; and
the mapping unit is further configured to establish a mapping relationship between the logical address and the second storage address.

9. The storage device according to claim 8, wherein the reserved space of the first storage area is smaller than the reserved space of the second storage area.

10. The storage device according to claim 8, wherein a ratio of the reserved space of the first storage area to the data space of the first storage area is less than a ratio of the reserved space of the second storage area to the data space of the second storage area.

11. The storage device according to claim 9 or 10, wherein the determining unit is specifically configured to determine whether the write request is a sequential write request or a random write request, wherein
the first condition is the sequential write request, and the second condition is the random write request.

12. The storage device according to claim 9 or 10, wherein the determining unit is specifically configured to determine a sequence level of the write request, wherein
the first condition is a first sequence level range, the second condition is a second sequence level range, and a minimum value of the first sequence level range is greater than a maximum value of the second sequence level range.

13. The storage device according to claim 9 or 10, wherein the determining unit is specifically configured to determine a randomness level of the write request, wherein
the first condition is a first randomness level range, the second condition is a second randomness level range, and a maximum value of the first randomness level range is less than a minimum value of the second randomness level range.

14. The storage device according to claim 9 or 10, wherein the determining unit is specifically configured to determine a size of the data carried in the write request, wherein
the first condition is a first data range stored in the first storage area, the second condition is a second data range stored in the second storage area, and a minimum value of the first data range is greater than a maximum value of the second data range.

15. A storage device, comprising a storage controller, a first storage area, and a second storage area, wherein the first storage area comprises data space and reserved space, and the second storage area comprises data space and reserved space, and
the storage controller is configured to:
receive a write request, wherein the write request carries a logical address and data;
determine a feature of the write request;
write, when the feature of the write request meets a first condition, the data carried in the write request to a first storage address of the reserved space of the first storage area; and
establish a mapping relationship between the logical address and the first storage address; or
write, when the feature of the write request meets a second condition, the data carried in the write request to a second storage address of the reserved space of the second storage area; and
establish a mapping relationship between the logical address and the second storage address.

16. The storage device according to claim 15, wherein the reserved space of the first storage area is smaller than the reserved space of the second storage area.

17. The storage device according to claim 15, wherein a ratio of the reserved space of the first storage area to the data space of the first storage area is less than a ratio of the reserved space of the second storage area to the data space of the second storage area.

18. The storage device according to claim 16 or 17, wherein the storage controller is specifically configured to determine whether the write request is a sequential write request or a random write request, wherein
the first condition is the sequential write request, and the second condition is the random write request.

19. The storage device according to claim 16 or 17, wherein the storage controller is specifically configured to determine a sequence level of the write request, wherein
the first condition is a first sequence level range, the second condition is a second sequence level range, and a minimum value of the first sequence level range is greater than a maximum value of the second sequence level range.

20. The storage device according to claim 16 or 17, wherein the storage controller is specifically configured to determine a randomness level of the write request, wherein
the first condition is a first randomness level range, the second condition is a second randomness level range, and a maximum value of the first randomness level range is less than a minimum value of the second randomness level range.

21. The storage device according to claim 16 or 17, wherein the storage controller is specifically configured to determine a size of the data carried in the write request, wherein
the first condition is a first data range stored in the first storage area, the second condition is a second data range stored in the second storage area, and a minimum value of the first data range is greater than a maximum value of the second data range.
